# EUROPÄISCHE PATENTSCHRIFT

(11) **EP 3 147 581 B1**
(45) Veröffentlichungstag und Bekanntmachung des Hinweises auf die Patenterteilung: **12.02.2020**
(21) Anmeldenummer: 16191049.2
(22) Anmeldetag: 23.09.2003
(51) Int. Cl.: F24F 110/30, F24F 110/40, F24F 11/77, F24F 7/013, F24F 11/00, F24F 12/00, F04D 29/36, F04D 29/38

(54) **LUFTAUSTAUSCHSYSTEM FÜR DIE BELÜFTUNG WENIGSTENS EINES RAUMS EINES GEBÄUDES**
AIR-EXCHANGE SYSTEM FOR THE VENTILATION OF AT LEAST ONE ROOM IN A BUILDING
SYSTÈME DE RENOUVELLEMENT D'AIR POUR AÉRER AU MOINS UNE PIÈCE DANS UN BÂTIMENT

(30) Priorität: 24.09.2002 DE 20214833 U
(43) Veröffentlichungstag der Anmeldung: 29.03.2017
(62) Teilanmeldung aus: 10185578.1
(73) Patentinhaber: Meltem Wärmerückgewinnung GmbH & Co. KG, 82239 Alling (DE)
(72) Erfinder: REYNARTZ, Armin, 82239 Alling (DE)
(74) Vertreter: Schweiger, Martin

(56) Entgegenhaltungen:
- EP-A1- 1 134 509
- WO-A1-01/84057
- CH-A5- 599 510
- GB-A- 2 200 411
- JP-A- H10 267 342
- US-A- 4 284 236
- US-A- 4 407 185

## Beschreibung

Die Erfindung betrifft ein Luftaustauschsystem für die Belüftung wenigstens eines Raums eines Gebäudes mit wenigstens einer Luftaustauschvorrichtung.

Zur Gewährleistung gleichbleibend hoher Atemluftqualität in Wohn- und Arbeitsräumen von Gebäuden wird oft ein Luftaustausch mit der Umwelt erzwungen. Dabei wird kühlere, unverbrauchte Außenluft in das Gebäudeinnere gefördert und gleichzeitig wärmere, verbrauchte Abluft aus dem Gebäudeinneren nach draußen gefördert. Aus Energieeffizienzgründen kann die Wärmeenergie der Abluft dazu verwendet werden, um die hineinströmende Außenluft zu erwärmen.

Dabei kommen Wärmetauscher zum Einsatz, die Wärme in Richtung eines Temperaturgefälles zwischen den zwei Luftströmen übertragen. Es sind Rohrbündel-, Rippenrohr-, Platten-, Spiral-, Spiralrohr-Doppelmantel- und Wickelwärmetauscher bekannt. Solche Wärmetauscher sind häufig Bestandteile von Luftaustauschvorrichtungen, die auch als Rekuperatoren oder als Rekuperativgeräte bezeichnet werden.

Bei Gebäudeabschnitten mit mehreren Räumen, bei denen ein Luftaustausch mittels einer dezentralen Luftaustauschvorrichtung mit einem Wärmetauscher vorgenommen wird, ergibt sich oft das Problem, daß dieser Luftaustausch nicht zufriedenstellend ist. Besonders diejenigen Räume, in denen sich die Luftaustauschvorrichtung nicht unmittelbar befindet, werden häufig nur unzureichend mit frischer und unverbrauchter Luft versorgt.

WO 01/84057 A1 offenbart ein Luftaustauschsystem welches die Zu- und Fort-luft in Abhängigkeit von der Differenz der Geschwindigkeit des Luftdurchflusses durch die Zu- und Fortluftrohre kontrolliert.

Es ist daher Aufgabe der Erfindung, ein einfach handzuhabendes Luftaustauschsystem mit gutem Wirkungsgrad anzugeben, bei dem in allen zu belüftenden Räumen ein ausreichender Luftaustausch stattfindet.

Diese Aufgabe wird durch den Gegenstand der unabhängigen Ansprüche gelöst. Vorteilhafte Ausgestaltungen ergeben sich aus den jeweiligen Unteransprüchen.

Ein erfindungsgemäßes Luftaustauschsystem für die Belüftung wenigstens eines Raumes eines Gebäudes weist wenigstens eine Luftaustauschvorrichtung auf. Diese wenigstens eine Luftaustauschvorrichtung beinhaltet ein Gehäuse, einen in dem Gehäuse angeordneten elektrischen Zuluft-Lüfter zur Förderung eines Zuluftstroms von einer Außenseite des Gebäudes in den bzw. in einen Raum des Gebäudes sowie einen in dem Gehäuse angeordneten elektrischen Fort-luft-Lüfter zur Förderung eines Fortluftstroms aus dem bzw. aus einem Raum des Gebäudes auf die Außenseite des Gebäudes sowie einen in dem Gehäuse angeordneten Wärmetauscher. Durch die Abkühlseite des Wärmetauschers bzw. der Wärmetauscher dieser Luftaustauschvorrichtung bzw. dieser Luftaustauschvorrichtungen fließt jeweils ein Fortluftstrom, durch die Erwärmseite des Wärmetauschers bzw. der Wärmetauscher fließt jeweils ein Zuluftstrom.

Befinden sich eine erste Außenwand sowie eine zweite Außenwand in unterschiedlichen Räumen des Gebäudes, so werden die zwischen den beiden Außenwänden liegenden Räume des Gebäudes ebenfalls kontinuierlich mit frischer erwärmter Außenluft durchspült. Hierbei ist sicherzustellen, daß die Luftbewegung zwischen diesen Räumen nicht beispielsweise durch eine geschlossene Tür unterbrochen wird.

Wenn zwischen der ersten Außenwand und der zweiten Außenwand wenigstens ein Durchgang, insbesondere eine Treppe, eine Tür oder ein Korridor und/oder wenigstens ein weiterer Raum angeordnet ist, so werden diese ebenfalls kontinuierlich mit frischer erwärmter Außenluft versorgt. Dies wird auch als Querlüftung bezeichnet.

In der Erfindung sind die Luftaustauschvorrichtungen mit einer Steuerungseinheit, insbesondere mit einem Computer, verbunden. Über diese Steuerungseinheit können die Drehfrequenzen der Lüfterräder und/oder die Anstellwinkel der Lüfterblätter für die Zuluft-Lüfter und für die Fortluft-Lüfter der einzelnen Luftaustauschvorrichtungen individuell und präzise eingestellt werden.

Eine nicht-erfindungsgemässe Ausgestaltung betrifft des weiteren ein Luftaustauschsystem für die Belüftung wenigstens eines Raums eines Gebäudes, das wenigstens eine vorstehend beschriebene Luftaustauschvorrichtung sowie wenigstens eine Betätigungsvorrichtung, insbesondere einen Schalter einer Verbrennungseinrichtung, beispielsweise eines Ofens oder eines Kamins umfaßt. Diese Betätigungsvorrichtung kann dabei so ausgeführt sein, daß sie eine Belüftungsklappe der Betätigungsvorrichtung öffnen bzw. schließen und dementsprechend die Zufuhr der für den Verbrennungsvorgang notwendigen Sauerstoffmenge regulieren kann.

Eine lediglich über einen Zuluft-Lüfter verfügende Luftaustauschvorrichtung ist dabei so ausgebildet, daß der Zuluft-Lüfter bei einer Betätigung der bzw. einer Betätigungsvorrichtung eine vorgebbare Drehfrequenz annimmt und/oder daß der Anstellwinkel der Lüfterblätter des Zuluft-Lüfters einen vorgebbaren Wert annehmen. Verfügt die Luftaustauschvorrichtung zusätzlich noch über einen Fortluft-Lüfter, so kann auch dieser Fortluft-Lüfter bei einer Betätigung der bzw. einer Betätigungsvorrichtung eine vorgebbare Drehfrequenz und/oder einen vorgebbaren Lüfterblattanstellwinkel annehmen, die jeweils geringer als die Drehfrequenz oder der Lüfterblattanstellwinkel des Zuluft-Lüfters ausgebildet sind.

Gemäß dieser nicht erfindungsgemässen Ausführungsform nimmt eine Luftaustauschvorrichtung unmittelbar nach dem Einschalten einer in einem Raum des Gebäudes angeordneten Verbrennungseinrichtung den Betrieb auf. Dadurch wird eine günstige Luftzirkulation gewährleistet und das Erzeugen eines Unterdrucks durch die Verbrennungseinrichtung in dem Raum zuverlässig vermieden. Alternativ oder zusätzlich zu einer solchen Betätigungsvorrichtung kann ein Temperatursensor, insbesondere ein Thermometer in einem Bereich der Verbrennungseinrichtung vorgesehen sein. Dieser Temperatursensor mißt vorzugsweise in regelmäßigen Zeitabständen die in einem Bereich der Verbrennungseinrichtung herrschende Temperatur. Übersteigt die gemessene Temperatur einen durch einen Benutzer voreinstellbaren Grenzwert, so wird der Zuluft-Lüfter ausgeschaltet oder der Betriebszustand des Zuluft-Lüfters so geändert, daß weniger Zuluft in das Gebäudeinnere strömt. Dadurch wird die Sauerstoffzufuhr und damit die Intensität der in der Verbrennungseinrichtung stattfindenden Verbrennung gemindert. So können der Verbrennungsprozeß auf einfache Weise kontrolliert und eine übermäßige Hitzeentwicklung, die in ungünstigen Fällen auch zu einem Hausbrand führen kann, vermieden werden.

Die Erfindung betrifft ein Luftaustauschsystem für die Belüftung wenigstens eines Raums eines Gebäudes mit einer vorstehend beschriebenen Luftaustauschvorrichtung sowie mit einem Differenzdrucksensor, der die Druckdifferenz Δp zwischen der Innen- und der Außenseite des Raums des Gebäudes erfaßt. Dieser Differenzdruck kann auch durch wenigstens einen in dem Raum des Gebäudes angeordneten Innendrucksensor sowie durch wenigstens einen weiteren außerhalb des Gebäudes angeordneten Außendrucksensor zuverlässig erfaßt werden. Zur Druckmessung sowie zur Druckdifferenzmessung kommen Manometer und Barometer zum Einsatz.

Die erfindungsgemäße Luftaustauschvorrichtung umfaßt dabei einen elektrischen Zuluft-Lüfter zur Förderung eines Zuluftstroms in das Gebäudeinnere sowie einen elektrischen Fortluft-Lüfter zur Förderung eines Fortluftstroms auf eine Außenseite des Gebäudes. Die Drehfrequenzen des Zuluft-Lüfters und des Fortluft-Lüfters sowie in einer vorteilhaften Weiterbildung der Erfindung die Anstellwinkel der Lüfterblätter des Zuluft-Lüfters und des Fortluft-Lüfters sind dabei in Abhängigkeit des gemessenen Differenzdrucks individuell einstellbar. Dadurch wird eine vorteilhafte Druckanpassung des in dem Raum des Gebäudes herrschenden Drucks an die Umgebung auf der Außenseite des Gebäudes ermöglicht. Beispielsweise kann die erfindungsgemäße Luftaustauschvorrichtung dann eingeschaltet werden, wenn der zwischen der Innen- und der Außenseite des Gebäudes gemessene Differenzdruck einen Wert von 5 Pa überschreitet. Wenn innerhalb des Gebäudes ein Überdruck herrscht, so arbeitet der Fortluft-Lüfter vorzugsweise mit einer größeren Drehfrequenz und/oder mit einem steileren Lüfterblattanstellwinkel als der Zuluft-Lüfter. Bei einem im Gebäudeinneren herrschenden Unterdruck hingegen arbeitet der Fortluft-Lüfter mit einer geringeren Drehfrequenz und bevorzugt mit einem flacheren Lüfterblattanstellwinkel als der Zuluft-Lüfter.

In einer vorteilhaften Weiterbildung der Erfindung umfaßt das Luftaustauschsystem auch eine Notlüftungsvorrichtung mit wenigstens einem Zuluft-Lüfter. Diese wird dann zwangseingeschaltet, wenn die von dem bzw. einem Differenzdrucksensor gemessene Druckdifferenz zwischen der Innen- und der Außenseite des Gebäudes einen vorgebbaren Wert überschreitet. Die Notlüftungsvorrichtung kann auch dann in Betrieb genommen werden, wenn eine von dem Temperatursensor bzw. von den Temperatursensoren gemessene Temperatur einen vorgebbaren Wert unterschreitet. Dies kann beispielsweise dann der Fall sein, wenn der in der Verbrennungseinrichtung stattfindende Verbrennungsprozeß mangels Sauerstoffzufuhr droht, zum Erliegen zu kommen. Durch das Vorsehen einer solchen Notlüftungsvorrichtung können sowohl einem übermäßig hohen Ansteigen der Druckdifferenz zwischen der Innen- und der Außenseite des Gebäudes als auch einem unerwünschten Temperaturabfall in der Verbrennungseinrichtung zügig und zuverlässig entgegengewirkt werden.

Bei einer weiteren vorteilhaften Ausführungsform der Erfindung umfaßt das Luftaustauschsystem zusätzlich einen akustischen und/oder optischen Alarmgeber zur Erzeugung eines akustischen und/oder optischen Alarmsignals. Dieser Alarmgeber ist so ausgebildet, daß er ein Alarmsignal erzeugt, wenn die durch den bzw. einen Temperatursensor gemessene Temperatur und/oder die von dem bzw. einem Differenzdrucksensor gemessene Druckdifferenz zwischen der Innen- und der Außenseite des Gebäudes jeweils einen bestimmten vorgebbaren Wert überschreiten.

Gemäß einer besonders vorteilhaften Ausgestaltung dieser Ausführungsform der Erfindung erzeugt der Alarmgeber dann ein Alarmsignal, wenn der Differenzdruck länger als eine durch einen Benutzer vorgebbare Zeitspanne über einem bestimmten Grenzwert liegt. Dabei wird ein Alarmsignal ausgegeben, wenn sich ein vorhandener Druckunterschied trotz des Betriebs der Luftaustauschvorrichtung nicht vermindern oder beseitigen läßt. Durch das Vorsehen eines derart ausgebildeten Alarmgebers wird ein Benutzer zeitnah und zuverlässig auf derartige ungewünschte Situationen aufmerksam gemacht.

Wenn in einem Einlaßbereich vor dem Fortluft-Lüfter zusätzlich ein Rauchmelder angeordnet ist, so können plötzlich auftretende gefährliche Schadgase, insbesondere Kohlenmonoxid CO, Kohlendioxid CO₂ und Chlor Cl sehr zeitnah und zuverlässig detektiert werden. Dabei kann ein Alarmsignal durch den Alarmgeber erzeugt werden, wenn der Rauchmelder eine bestimmte Schadgaskonzentration im Abluftstrom feststellt.

In einer vorteilhaften Weiterbildung der Erfindung umfaßt das Luftaustauschsystem weiterhin eine Steuerungseinheit mit Ein- und Ausgängen. Die Eingänge der Steuerungseinheit sind mit dem Temperatursensor und/oder mit der Betätigungsvorrichtung und/oder mit dem Differenzdrucksensor und/oder mit dem Rauchmelder verbunden. Die Ausgänge sind mit der Luftaustauschvorrichtung und/oder mit dem Notlüftungsgerät und/oder mit dem Alarmgeber verbunden. Die Steuerungseinheit ist so ausgebildet, daß sie die an den Eingängen anliegenden Signale ständig oder in vorzugsweise regelmäßigen Zeitabständen erfaßt und in Abhängigkeit dieser Eingangssignale Ausgangssignale erzeugt, mittels derer die an den Ausgängen anliegenden Einheiten gesteuert werden. Dabei kann die Luftaustauschvorrichtung in Betrieb genommen, gestoppt oder ihr Betriebszustand verändert werden. Weiterhin können das Notlüftungsgerät zugeschaltet und/oder der Alarmgeber zum Ausgeben eines Alarmsignals veranlasst werden. Durch eine derartige zentrale Steuerungseinheit können Betriebszustände einer Vielzahl von an die zentrale Steuerungseinheit angeschlossenen Einheiten parallel, zeitnah und zuverlässig erfaßt werden.

Wenn die Luftaustauschvorrichtung zusätzlich einen bereits beschriebenen Wärmetauscher umfaßt, durch dessen Erwärmseite der Zuluftstrom und durch dessen Abkühlseite der Abluftstrom fließt, so kann eine energieeffiziente Wärmeübertragung zwischen diesen beiden Strömen erfolgen.

Besonders effektiv und sicher kann eine erfindungsgemäße Luftaustauschvorrichtung dann betrieben werden, wenn ihre Gehäuserückseite an einer Außenwand angebracht ist und wenn an bzw. in dieser Außenwand wenigstens eine Rohrverbindung zu der Außenseite des Gebäudes vorgesehen ist.

Die Erfindung ist in den Zeichnungen anhand eines Ausführungsbeispiels näher veranschaulicht.
- Figur 1: zeigt eine schematische Darstellung einer Draufsicht auf eine Luftaustauschvorrichtung gemäß einem Ausführungsbeispiel,
- Figur 2: zeigt eine schematische, perspektivische Darstellung des in Figur 1 gezeigten Plattenwärmetauschers sowie eine grafische Veranschaulichung der den Plattenwärmetauscher durchfließenden Luftströme gemäß dem Ausführungsbeispiel,
- Figur 3: zeigt eine schematische Darstellung eines Querschnitts entlang der Schnittlinie A-A einer an einer Außenwand befestigten Luftaustauschvorrichtung gemäß dem Ausführungsbeispiel,
- Figur 4: zeigt eine schematische Darstellung eines Querschnitts entlang der Schnittlinie B-B der an der Außenwand befestigten Luftaustauschvorrichtung gemäß dem Ausführungsbeispiel,
- Figur 5: zeigt einen schematischen Grundriß eines Gebäudeabschnitts mit drei an der Innenseite einer Außenwand dieses Gebäudeabschnitts befestigten in Figur 1 gezeigten Luftaustauschvorrichtungen gemäß einem ersten Ausführungsbeispiel,
- Figur 6: zeigt eine schematische Schnittdarstellung eines Wohnhauses mit einem Kamin und mit einem Schornstein sowie eine schematische Darstellung eines in diesem Wohnhaus befindlichen Luftaustauschsystems gemäß einem zweiten Ausführungsbeispiel.

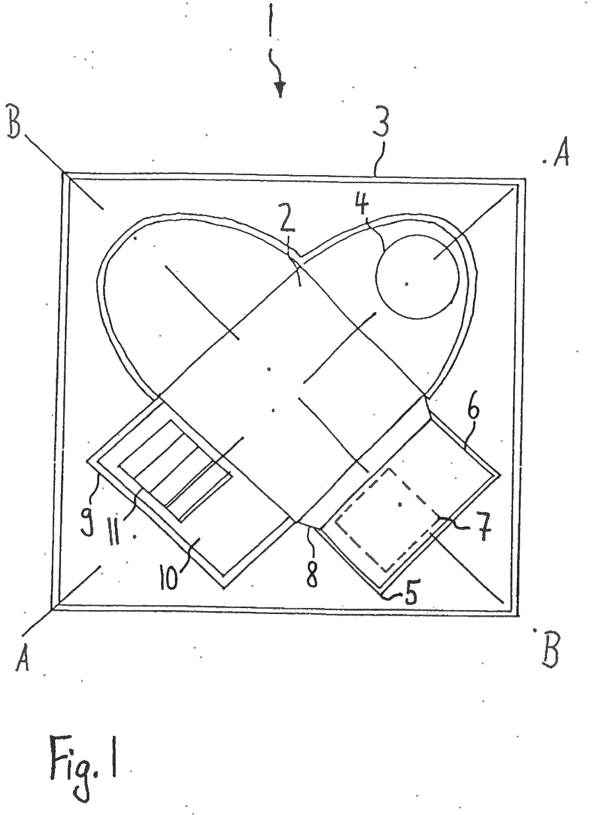

Figur 1 zeigt eine schematische Darstellung einer Draufsicht auf eine Luftaustauschvorrichtung 1 gemäß einem Ausführungsbeispiel.

Die Luftaustauschvorrichtung 1 ist von einem quadratischen Gehäuse 3 umschlossen. Bei der in Figur 1 gezeigten Draufsicht ist die Vorderseite des Gehäuses 3 abgenommen. Das Gehäuse 3 weist im Ausführungsbeispiel Kunststoff auf, ist aber auch aus anderen Materialien fertigbar.

Mittig in dem Gehäuse 3 ist ein quadratischer Plattenwärmetauscher 2 angeordnet, insbesondere aus gut wärmeleitendem Metall, wobei in der Draufsicht gemäß Figur 1 nur die oberste Platte des Plattenwärmetauschers 2 sichtbar ist. Die Seitenlänge des Plattenwärmetauschers 2 entspricht knapp der Hälfte der Seitenlänge des Gehäuses 3. Der Plattenwärmetauscher 2 ist in einem Winkel von 45° bezogen auf das Gehäuse 3 gedreht angeordnet.

Oberhalb der rechten oberen Seite des Plattenwärmetauschers 2 ist eine kreisrunde Außenlufteinlaßöffnung 4 in der Unterseite des Gehäuses 3 vorgesehen. Um die Außenlufteinlaßöffnung 4 ist eine auf der Unterseite des Gehäuses 3 aufsetzende, gekrümmte Wand vorgesehen, die am oberen sowie am unteren Ende der rechten oberen Seite des Plattenwärmetauschers 2 abschließt.

Auf der linken oberen Seite des Plattenwärmetauschers 2 ist eine ähnlich geformte Wand vorgesehen, die am oberen sowie am unteren Ende der linken oberen Seite des Plattenwärmetauschers 2 abschließt. In der hier nicht gezeigten Vorderseite des Gehäuses 3 ist eine Öffnung vorgesehen, die beim Aufsetzen der Vorderseite auf das Gehäuse 3 innerhalb dieser Wand angeordnet ist.

An der rechten unteren Seite des Plattenwärmetauschers 2 ist ein Fortluft-Lüftergehäuse 5 mit einem Fortluftradiallüfter 6 sowie ein zwischen dem Fortluftradiallüfter 6 und dem Plattenwärmetauscher 2 angeordneter Trichter 8 vorgesehen. Der Trichter 8 setzt auf der gesamten Breite der rechten unteren Seite des Plattenwärmetauschers 2 an und verjüngt sich auf einer Strecke etwa einem Achtel der Seitenlänge des Plattenwärmetauschers 2 um einen Winkel von 30°. Auf der gesamten Breite des Auslaßseite des Trichters 8 setzt der Fortluftradiallüfter 6 an, von dem in der Draufsicht in Figur 1 lediglich die Verkleidung erkennbar ist. Die Drehachse des Fortluftradiallüfters 6 ist dabei senkrecht auf der Höhe der Mitte der rechten unteren Seite des Plattenwärmetauschers 2 ausgerichtet. Der Durchmesser bzw. die Breite des Fortluftradiallüfters 6 entspricht dabei in etwa der Auslaßseite des Trichters 8. Die Tiefe des Fortluftradiallüfters 6 entspricht ungefähr der Hälfte seiner Breite. Der Fortluftradiallüfter 6 ist von einem Fortluft-Lüftergehäuse 5 umschlossen, das auf seiner Unterseite eine in Figur 1 gestrichelt dargestellte, rechteckige Fortluftauslaßöffnung 7 aufweist. Diese Fortluftauslaßöffnung 7 ist dabei von der Mitte des Fortluftradiallüfters 6 ausgehend etwas nach rechts oben versetzt angeordnet.

An der linken unteren Seite des Plattenwärmetauschers 2 setzt ein von einem dünnwandigen Zuluft-Lüftergehäuse 9 umschlossener Zuluftansaugradiallüfter 10 an. Dabei ist die Drehachse des Zuluftansaugradiallüfters 10 orthogonal zu der linken unteren Seite des Plattenwärmetauschers 2 auf der Höhe deren Mitte angeordnet. Der Durchmesser bzw. die Breite des Zulaufansaugradiallüfters 10 entspricht in etwa der Seitenlänge des Plattenwärmetauschers 2, seine Tiefe entspricht ungefähr der Hälfte seiner Breite. In dem linken oberen Bereich des Zuluftansaugradiallüfters 10 ist eine rechteckige Zulufteinlaßöffnung angeordnet, durch die mehrere Lüfterschaufeln des Zuluftansaugradiallüfters 10 erkennbar sind. Diese sind im Ausführungsbeispiel parallel zur Drehachse des Zuluftansaugradiallüfters 10 angeordnet, können jedoch auch schräg zu dieser oder gekrümmt verlaufen.

Ein erste Schnittlinie A-A verläuft durch die linke untere sowie durch die rechte obere Ecke des Gehäuses 3. Eine weitere Schnittlinie B-B verläuft durch die linke obere sowie durch die rechte untere Ecke des Gehäuses 3.

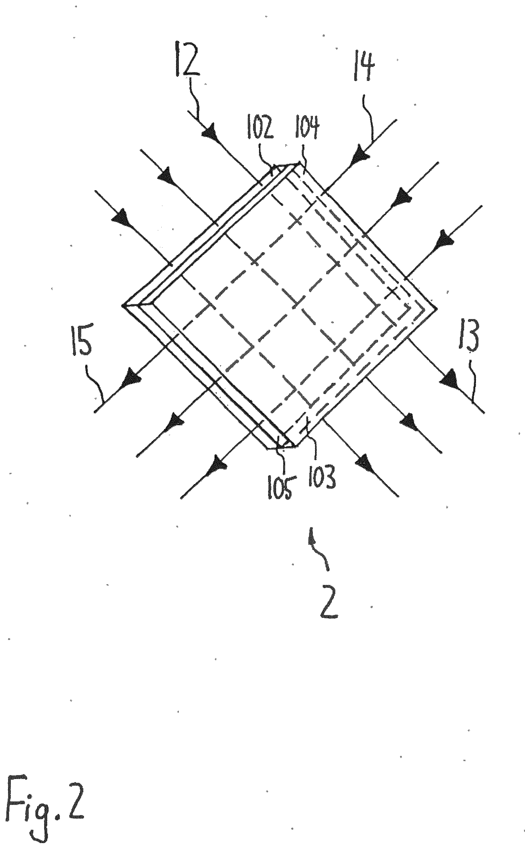

Figur 2 zeigt eine schematische, perspektivische Darstellung des in Figur 1 gezeigten Plattenwärmetauschers 2 sowie eine grafische Veranschaulichung der den Plattenwärmetauscher 2 durchfließenden Luftströme gemäß dem Ausführungsbeispiel.

Der Plattenwärmetauscher 2 umfaßt drei übereinander angeordnete, quadratische Metallplatten, die in Figur 2 jeweils auf einer Ecke stehend dargestellt sind. Die untere und die mittlere Platte des Plattenwärmetauschers 2 weisen auf der linken oberen Seite einen schlitzartigen Warmlufteinlaß 102 und auf der rechten unteren Seite einen schlitzartigen Kaltluftauslaß 103 auf. Auf der linken unteren sowie auf der rechten oberen Seite ist die untere Platte mit der mittleren Platte des Plattenwärmetauschers 2 jeweils mit einer durchgehenden Wand verbunden. An der rechten oberen Seite des Plattenwärmetauschers 2 befindet sich zwischen der mittleren und der oberen Platte ein schlitzartiger Kaltlufteinlaß 104. An der linken unteren Seite des Plattenwärmetauschers 2 ist zwischen der mittleren und der oberen Platte des Plattenwärmetauschers 2 ein schlitzartiger Warmluftauslaß 105 vorgesehen. An der linken oberen sowie an der rechten unteren Seite des Plattenwärmetauschers 2 ist zwischen der mittleren und der oberen Platte jeweils eine Wand vorgesehen.

Gemäß der Darstellung in Figur 2 fließt ein Abluftstrom 12 in den Warmlufteinlaß 102 hinein, durchströmt den Plattenwärmetauscher 2 und tritt auf der gegenüberliegenden Seite als Fortluftstrom 13 aus dem Kaltluftauslaß 103 aus. Der dabei von dem Abluftstrom 12 durchflossene Bereich des Plattenwärmetauschers 2 wird auch als Abkühlseite bezeichnet. Ein Außenluftstrom 14 tritt durch den Kaltlufteinlaß 104 in den Plattenwärmetauscher 2 ein, durchströmt diesen und tritt als Zuluftstrom 15 auf der gegenüberliegenden Seite aus dem Warmluftauslaß 105 aus. Der dabei von dem Außenluftstrom 14 durchflossenen Bereich des Plattenwärmetauschers 2 wird auch Erwärmseite des Plattenwärmetauschers 2 genannt.

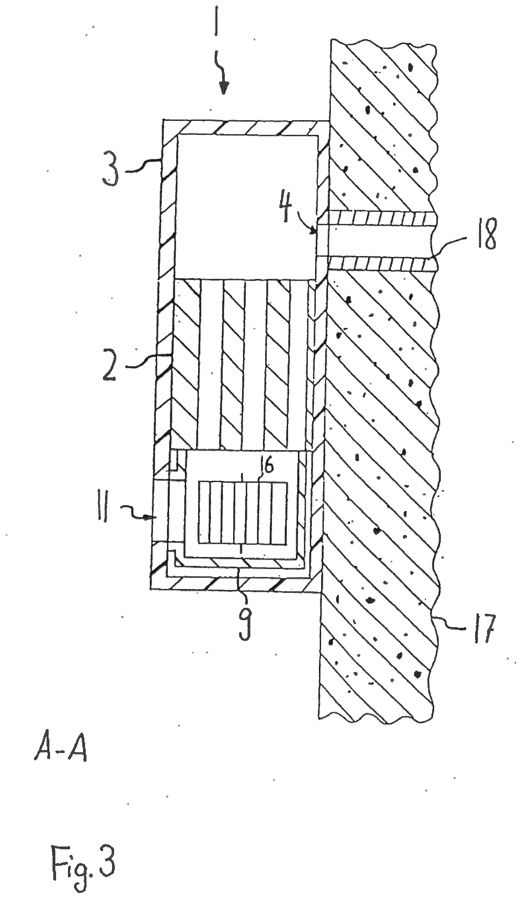

Figur 3 zeigt eine schematische Darstellung eines Querschnitts entlang der Schnittlinie A-A einer an einer Außenwand 17 befestigten Luftaustauschvorrichtung 1 gemäß dem Ausführungsbeispiel. In Figur 3 ist die Erwärmseite des Plattenwärmetauschers 2 betrachtet.

Die Luftaustauschvorrichtung 1 liegt mit der Rückseite ihres Gehäuses 3 an der Vorderseite der Außenwand 17 an und befindet sich dementsprechend im Gebäudeinneren. Aus der Querschnittsdarstellung in Figur 3 ist ersichtlich, daß die diagonale Höhe des Luftaustauschsystems 1 in etwa dem Dreifachen seiner Tiefe entspricht. Dabei gliedert sich das Innere des Gehäuses 3 in einen zuoberst angeordneten Außenlufteinlaßbereich, in einen mittig angeordneten Plattenwärmetauscherbereich und in einen zuunterst angeordneten Zuluftauslaßbereich.

In dem Außenlufteinlaßbereich ist an der Rückseite des Gehäuses 3 die Außenlufteinlaßöffnung 4 ausgebildet, an die sich außenwandseitig ein waagerechtes Außenluftzufuhrrohr 18 anschließt. In dem Plattenwärmetauscherbereich ist der Plattenwärmetauscher 2 angeordnet, der drei parallele, in der Darstellung gemäß Figur 3 von oben nach unten verlaufende Luftführungen aufweist. Der hier gezeigte Plattenwärmetauscher 2 entspricht prinzipiell dem Plattenwärmetauscher 2 aus Figur 2, weist jedoch acht übereinander angeordnete Platten auf. In dem Zuluftauslaßbereich ist ein Zuluft-Lüfterrad 16 innerhalb des Zuluft-Lüftergehäuses 9 angeordnet. Das Zuluft-Lüfterrad 16 ist dabei horizontal mittig angeordnet. Auf gleicher Höhe mit den Lüfterschaufeln des Zuluft-Lüfterrads 16 ist in der Vorderseite des Gehäuses 3 sowie in der linken Seite des Zuluft-Lüftergehäuses 9 eine Zuluftauslaßöffnung 11 vorgesehen, deren Höhe der Breite der Lüfterschaufeln entspricht.

Das Zuluft-Lüftergehäuse setzt auf dem linken sowie auf dem rechten Ende der Unterseite des Plattenwärmetauschers 2 an, verläuft beidseitig vertikal nach unten und weist unmittelbar vor der Unterseite des Gehäuses 3 eine waagerechte Unterseite auf.

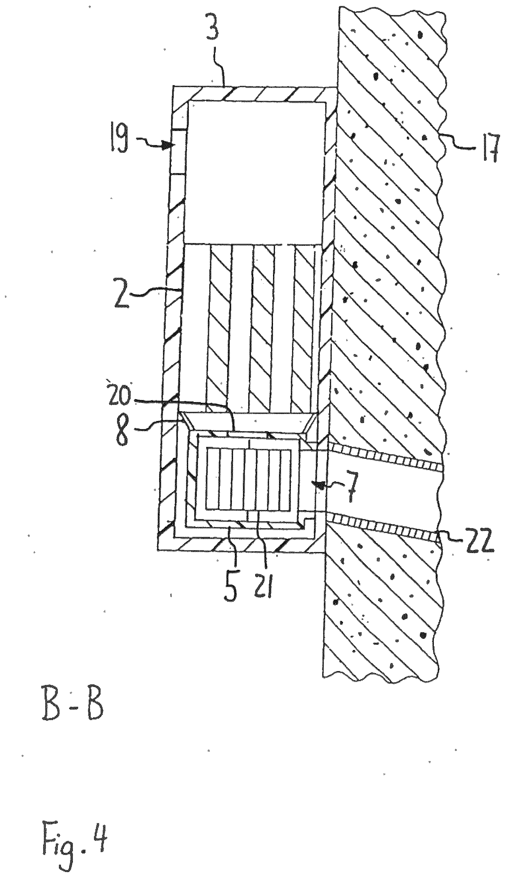

Figur 4 zeigt eine schematische Darstellung eines Querschnitts entlang der Schnittlinie B-B des an der Außenwand 17 befestigten Luftaustauschsystems 1 gemäß dem Ausführungsbeispiel. In Figur 4 ist die Abkühlseite des Plattenwärmetauschers 2 betrachtet.

Das Innere des Gehäuses 3 gliedert sich dabei in einen oberen Ablufteinlaßbereich, in einen mittleren Plattenwärmetauscherbereich und in einen unteren Fortluftauslaßbereich. Im Ablufteinlaßbereich ist auf der Vorderseite des Gehäuses 3 eine Ablufteinlaßöffnung 19 vorgesehen. Im Plattenwärmetauscherbereich ist der Plattenwärmetauscher 2 angeordnet, der vier parallele, vertikal verlaufende Luftführungen aufweist. Der hier gezeigte Plattenwärmetauscher 2 entspricht prinzipiell dem Plattenwärmetauscher 2 aus Figur 2, weist jedoch acht übereinander angeordnete Platten auf. Der Fortluftauslaßbereich umfaßt einen hinsichtlich der Bauart, hinsichtlich der Größe und hinsichtlich der Ausrichtung mit dem in Figur 3 gezeigten Zuluftlüfterrad 16 identisches Fortlüftlüfterrad 21. Das Fortluft-Lüfterrad 21 ist zentriert innerhalb des Fortluft-Lüftergehäuses 5 angeordnet. Horizontal auf gleicher Höhe mit dem Fortluft-Lüfterrad 21 weist das Fortluft-Lüftergehäuse 5 auf der rechten Seite sowie das Gehäuse 3 auf seiner Rückseite jeweils eine Fortluftauslaßöffnung 7 auf. An dieser Fortluftauslaßöffnung 7 setzt ein Fortluftauslaßrohr 22 an, das leicht nach rechts unten geneigt verläuft. Mittig auf der Oberseite des Fortluft-Lüftergehäuses 5 ist eine Fortluftzuführungsöffnung 20 vorgesehen, deren Breite ungefähr einem Drittel der Gesamtbreite des Fortluft-Lüftergehäuses 5 entspricht. Zwischen dem linken und dem rechten Ende der Unterseite des Plattenwärmetauschers 2 und der linken und rechten Seite der Oberseite des Fortluft-Lüftergehäuses 5 ist der Trichter 8 angeordnet.

Im folgenden wird die Funktionsweise der Luftaustauschvorrichtung 1 näher erläutert.

Wie in Figur 2 beschrieben, besteht zwischen dem Abluftstrom 12 und dem Außenluftstrom 14 ein Temperaturgefälle, das im Betrieb der Luftaustauschvorrichtung 1 durch den Plattenwärmetauscher 2 reduziert wird. Dabei wird der Abluftstrom 12 abgekühlt und der Außenluftstrom 14 erwärmt. Der Abluftstrom 12 sondert bei der Abkühlung Kondenswasser ab, das an der Abkühlseite des Plattenwärmetauschers 2, insbesondere an dem Kaltluftauslaß 103 auftritt.

Wie in Figur 1 sowie in Figur 3 dargestellt, wird durch den Zuluftansaugradiallüfter 10 bzw. durch das Zuluftlüfterrad 16 kalte Außenluft angesaugt. Dieser Außenluftstrom 14 tritt durch das in Figur 3 gezeigte Außenluftzufuhrrohr 18 in die Luftaustauschvorrichtung 1 ein. Dann strömt der Außenluftstrom 14 durch die Luftführungen des Plattenwärmetauschers 2 und wird dabei erwärmt. Anschließend fließt die nun als Zuluftstrom 15 bezeichnete, erwärmte Luft durch die Zuluftauslaßöffnung 11 auf der Gehäusevorderseite 26 in das Gebäudeinnere.

Wie in Figur 1 und in Figur 4 ersichtlich, saugt der Fortluftradiallüfter 6 bzw. das Fortluft-Lüfterrad 21 durch die Bewegung der Lüfterschaufeln 23 gleichzeitig dazu warme Abluft aus dem Gebäudeinneren an. Dieser Abluftstrom 12 fließt in die Luftführungen des Plattenwärmetauschers 2. Beim Durchströmen des Plattenwärmetauschers 2 wird der Abluftstrom 12 gekühlt. Der Abluftstrom 12 gelangt danach durch den Trichter 8 und durch die Fortluftzuführungsöffnung 20 in das Fortluft-Lüftergehäuse 5. Von dort aus wird die nun als Fortluftstrom 13 bezeichnete Luft - in Folge der Bewegung des Fortluft-Lüfterrads 21 sowie in Folge der Druckdifferenz, die zwischen dem Innenraum des Fortluft-Lüfterrads 21 und dem außerhalb der Fortluftauslaßöffnung 7 gelegenen Bereich herrscht - durch die Fortluftauslaßöffnung 7 aus der Luftaustauschvorrichtung 1 sowie durch das Fortluftauslaßrohr 22 auf eine Außenseite des Gebäudes befördert.

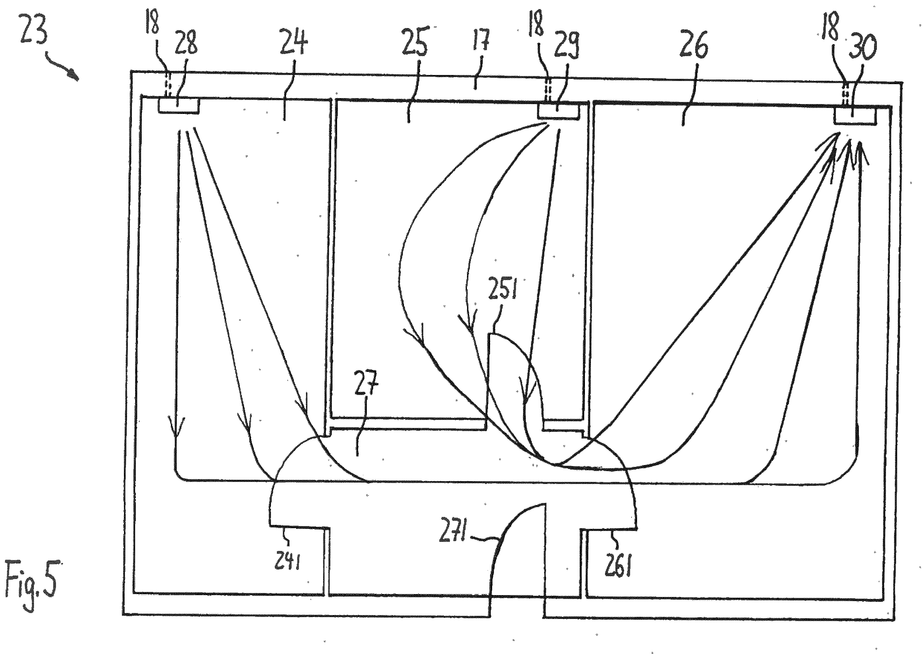

Figur 5 zeigt einen schematischen Grundriß eines Gebäudeabschnitts 23 mit drei an der Innenseite der Außenwand 17 dieses Gebäudeabschnitts 23 befestigten Luftaustauschvorrichtungen 28, 29 und 30 gemäß einem ersten Ausführungsbeispiel.

Der Gebäudeabschnitt 23 weist eine rechteckige längliche Form auf und gliedert sich in einen ersten Raum 24, in einen zweiten Raum 25, in einen dritten Raum 26 sowie in einen vierten Raum 27. Der erste Raum 24 weist eine rechteckige Form auf, befindet sich in dem linken Viertel des Gebäudeabschnitts 23 und erstreckt sich über die gesamte Tiefe des Gebäudeabschnitts 23. Die linke, die vordere und die hintere Begrenzung des ersten Raums 24 werden von einem Abschnitt der Außenwand 17 gebildet. Auf der rechten Seite wird der erste Raum 24 von einer gerade verlaufenden Zwischenwand begrenzt, in deren vorderem Bereich eine erste Tür 241 angeordnet ist, die den ersten Raum 24 mit dem vierten Raum 27 verbindet. Der vierte Raum 27 weist eine Breite von einem guten Drittel der Gesamtbreite des Gebäudeabschnitts 23 und eine Tiefe von ungefähr einem Drittel der Gesamttiefe des Gebäudeabschnitts 23 auf. Ein Abschnitt der Außenwand 17 bildet das vordere Ende des vierten Raums 27. Hinter dem vierten Raum 27 befindet sich der zweite Raum 25, der von dem vierten Raum 27 durch eine gerade verlaufende Zwischenwand getrennt ist. In dem rechten Bereich dieser Zwischenwand ist eine zweite Tür 251 angeordnet, die den vierten Raum 27 mit dem zweiten Raum 25 verbindet. Rechterhalb des zweiten Raums 25 und rechterhalb des vierten Raums 27 befindet sich der dritte Raum 26. Dieser erstreckt sich über die gesamte Tiefe und über ein gutes Drittel der Gesamtbreite des Gebäudeabschnitts 23. Der dritte Raum 26 ist durch eine gerade verlaufende Zwischenwand von dem zweiten Raum 25 und von dem vierten Raum 27 getrennt, wobei in dem vorderen Bereich dieser Zwischenwand eine dritte Tür 261 zur Verbindung des dritten Raums 26 mit dem vierten Raum 27 angeordnet ist. An der Vorderseite des Gebäudeabschnitts 23 ist eine Eingangstür 271 vorgesehen, die in den vierten Raum 27 führt.

Eine erste Luftaustauschvorrichtung 28 befindet sich in einem linken Bereich der hinteren Wand des ersten Raums 24. Eine zweite Luftaustauschvorrichtung 29 ist in einem rechten Bereich der hinteren Wand des zweiten Raums 25 vorgesehen. Eine dritte Luftaustauschvorrichtung 30 ist in einem rechten Bereich der hinteren Wand des dritten Raums 26 angeordnet. Die Luftaustauschvorrichtungen 28 bis 30 sind jeweils mit ihrer Rückseite des Gehäuses 3 an die Innenseite der Außenwand 17 montiert. Dabei verlaufen hinter den Luftaustauschvorrichtungen 28 bis 30 jeweils ein Außenluftzufuhrrohr 18 sowie ein Fortluftauslaßrohr 22. Die Außenluftzufuhrrohre 18 sind in Figur 5 jeweils gestrichelt dargestellt. Die Luftaustauschvorrichtungen 28 bis 30 sind so an der Außenwand 17 befestigt, daß ihre Außenlufteinlaßöffnung 4 jeweils auf dem Außenluftzufuhrrohr 18 und ihre Fortluftauslaßöffnung 7 jeweils auf dem Fortluftauslaßrohr 22 anliegen.

Nachfolgend wird mit Bezug auf Figur 5 zunächst eine erste Variante des ersten Ausführungsbeispiels beschrieben, bei dem die zweite Tür 251 und die Eingangstür 271 geschlossen und die erste Tür 241 sowie die dritte Tür 261 geöffnet sind.

Die erste Luftaustauschvorrichtung 28, die zweite Luftaustauschvorrichtung 29 sowie die dritte Luftaustauschvorrichtung 30 fördern jeweils einen Zuluftstrom 15 in das Innere des Gebäudeabschnitts 23 und fördern gleichzeitig einen Fortluftstrom 13 aus dem Inneren des Gebäudeabschnitts 23 auf die hinter dem Gebäudeabschnitt 23 gelegene Außenseite des Gebäudeabschnitts 23.

Bei der zweiten Luftaustauschvorrichtung 29 drehen sich das Zuluft-Lüfterrad 16 und das Fortluft-Lüfterrad 21 mit derselben Drehfrequenz, so daß das Volumen des Zuluftstroms 15 mit dem Volumen des Fortluftstroms 13 übereinstimmt. Mit diesem Betriebsmodus der zweiten Luftaustauschvorrichtung 29 wird eine ausreichende Versorgung des zweiten Raums 25 mit frischer erwärmter Außenluft sichergestellt.

Das Zuluft-Lüfterrad 16 der ersten Luftaustauschvorrichtung 28 wird mit einer um 50% höheren Drehfrequenz betrieben als das Fortluft-Lüfterrad 21 der ersten Luftaustauschvorrichtung 28. Der durch die erste Luftaustauschvorrichtung 28 in den ersten Raum 24 geförderte Zuluftstrom 15 ist demnach um ungefähr 50% größer ausgebildet als der aus dem ersten Raum 24 auf die Außenseite des Gebäudeabschnitts 23 geförderte Fortluftstrom 13. Durch die erste Luftaustauschvorrichtung 28 wird demnach mehr frische Zuluft in den ersten Raum 24 befördert, als verbrauchte Fortluft aus ihm hinausbefördert wird.

Das Fortluft-Lüfterrad 21 der dritten Luftaustauschvorrichtung 30 wird mit einer um 50% höheren Drehfrequenz betrieben als das Zuluft-Lüfterrad 16 der dritten Luftaustauschvorrichtung 30. Dementsprechend ist das Volumen des aus dem dritten Raum 26 herausbeförderten Fortluftstroms 13 um ungefähr 50% größer ausgebildet als das Volumen des von der Außenseite des Gebäudeabschnitts 23 in den dritten Raum 26 hineinbeförderten Zuluftstroms 15. Durch die dritte Luftaustauschvorrichtung 28 wird somit weniger frische Zuluft in den dritten Raum 26 befördert, als verbrauchte Fortluft aus ihm hinausbefördert wird.

In dem Gebäudeabschnitt 23 entwickelt sich eine in Figur 5 mittels Pfeilen dargestellte Luftbewegung zwischen der ersten Luftaustauschvorrichtung 28 und der dritten Luftaustauschvorrichtung 30. Dabei sind die Pfeile, die in Figur 5 zwischen dem zweiten Raum 25 und dem dritten Raum 26 verlaufen, nicht zu beachten. Es entsteht ein Luftstrom, der sich, ausgehend von der ersten Luftaustauschvorrichtung 28, durch den ersten Raum 24, durch den vierten Raum 27 und durch den dritten Raum 26 bis zu der dritten Luftaustauschvorrichtung 30 erstreckt. Dadurch ist gewährleistet, daß der erste Raum 24 und der dritte Raum 26 sowie der zwischen diesen beiden Räumen angeordnete vierte Raum 27 mit frischer erwärmter Zuluft versorgt wird.

Im folgenden wird mit Bezug auf Figur 5 eine zweite Variante des zweiten Ausführungsbeispiels erläutert, bei dem die erste Tür 241, die zweite Tür 251 und die dritte Tür 261 geöffnet und die Eingangstür 271 geschlossen sind.

Dabei arbeiten sowohl bei der ersten Luftaustauschvorrichtung 28 sowie bei der zweiten Luftaustauschvorrichtung 29 die Zuluft-Lüfterräder 16 jeweils mit einer Drehfrequenz, die um ungefähr 25% höher ausgebildet ist als die Drehfrequenz der Fortluft-Lüfterräder 21. Dementsprechend wird von den Luftaustauschvorrichtungen 28 und 29 jeweils ungefähr 25% mehr Zuluft in das Innere des Gebäudeabschnitts 23 befördert, als Abluft hinausbefördert wird. Das Volumenverhältnis des Zuluftstroms 15 zu dem Fortluftstrom 13 beträgt bei den Luftaustauschvorrichtungen 28 und 29 jeweils 55:45.

Das Fortluft-Lüfterrad 21 der dritten Luftaustauschvorrichtung 30 dreht sich mit einer Drehfrequenz, die um ca. 50% größer ist, als die Drehfrequenz des Zuluft-Lüfterrads 16 der dritten Luftaustauschvorrichtung 30. Der von der dritten Luftaustauschvorrichtung 30 in den dritten Raum 26 geförderte Zuluftstrom 15 ist daher um ca. 50% geringer ausgebildet als der gleichzeitig aus dem dritten Raum 26 auf die Außenseite des Gebäudeabschnitts 23 beförderte Fortluftstrom 13. Das Verhältnis des Zuluftstroms 15 zu dem Fortluftstrom 13 beträgt ungefähr 40:60.

Durch diesen Betriebsmodus der Luftaustauschvorrichtungen 28-30 wird eine Versorgung der Räume 24 bis 27 mit frischer unverbrauchter Außenluft gewährleistet. Dabei wird auch der vierte Raum 27 durchlüftet, in dem sich nicht unmittelbar eine Luftaustauschvorrichtung befindet. Die Luftbewegung verläuft von der ersten Luftaustauschvorrichtung 28 durch den ersten Raum 24, durch den vierten Raum 27 und durch den dritten Raum 26 zu der dritten Luftaustauschvorrichtung 30 sowie von der zweiten Luftaustauschvorrichtung 29 über den zweiten Raum 25, über den vierten Raum 27 und über den dritten Raum 26 zu der dritten Luftaustauschvorrichtung 30. Diese Luftbewegungen sind in Figur 5 mittels Pfeilen dargestellt.

Diese Luftbewegungen können sehr einfach modifiziert werden, indem die Drehfrequenzen der Zuluft-Lüfterräder 16 sowie der Fortluft-Lüfterräder 21 der Luftaustauschvorrichtungen 28-30 verändert werden.

In weiteren, hier nicht gezeigten Varianten des ersten Ausführungsbeispiels können auch größere Gebäudeabschnitte 23 mit den erfindungsgemäßen Luftaustauschvorrichtungen belüftet werden. Dabei kann auch eine weit größere Zahl von Luftaustauschvorrichtungen zum Einsatz kommen, wobei ein Luftaustauschsystem mit einer geraden Anzahl von Luftaustauschvorrichtungen besonders effektiv arbeitet.

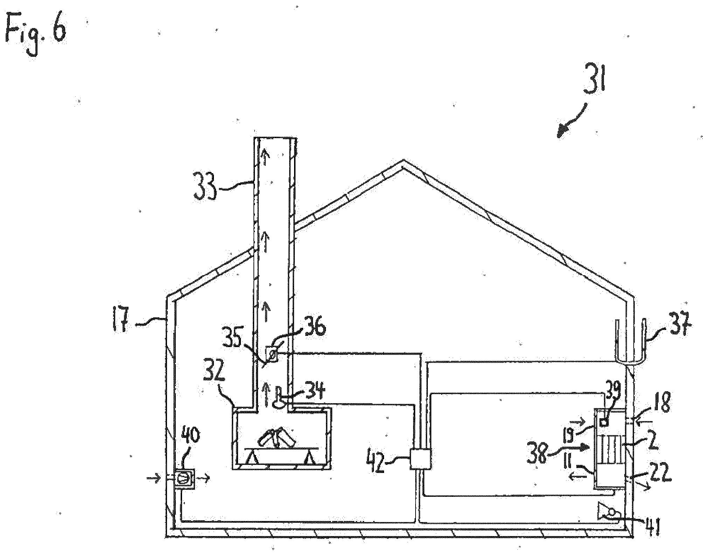

Figur 6 zeigt eine schematische Schnittdarstellung eines Wohnhauses 31 mit einem Kamin 32 und mit einem Schornstein 33 sowie eine schematische Darstellung eines in diesem Wohnhaus 31 befindlichen Luftaustauschsystems gemäß einem zweiten Ausführungsbeispiel.

Der Kamin 32 sowie der von diesem Kamin 32 senkrecht nach oben führende Schornstein 33 sind im linken Bereich des Gebäudeinneren des Wohnhauses 31 angeordnet. Durch den Kamin 32 können die bei dem Verbrennungsprozeß in dem Kamin 32 entstandenen Gase auf eine Außenseite des Wohnhauses 31 entweichen.

Das in Figur 6 dargestellte Luftaustauschsystem gliedert sich in eine vierte Luftaustauschvorrichtung 38, in einen Temperatursensor 34, in eine Belüftungsklappe 35 mit einem Belüftungsklappenschalter 36, in einen Differenzdrucksensor 37, in einen Rauchmelder 39, in ein Notlüftungsgerät 40, in einen Alarmgeber 41 sowie in eine Steuerungseinheit 42.

Der Temperatursensor 34 ist in einem unteren Bereich des Schornsteins 33 angeordnet und mißt die Temperatur der entweichenden Gase. Die über einen Belüftungsklappenschalter 36 steuerbare Belüftungsklappe 35 ist in Figur 6 etwas oberhalb des Temperatursensors 34 angeordnet. Diese Belüftungsklappe 35 ist drehbar ausgebildet und schließt in waagrechtem Zustand den Innenquerschnitt des Schornsteins 33 dicht ab, so daß keine Gase mehr nach oben entweichen können. In der Darstellung in Figur 6 befindet sich die Belüftungsklappe 35 in einem leicht schrägen und somit geöffneten Zustand.

Die in ihrem Aufbau der Luftaustauschvorrichtung 1 entsprechende vierte Luftaustauschvorrichtung 38 ist an die Innenseite der rechten Außenwand 17 des Wohnhauses 31 montiert. Der Rauchmelder 39 ist im Inneren der vierten Luftaustauschvorrichtung 38 unmittelbar an der Ablufteinlaßöffnung 19 angeordnet. Etwas oberhalb der vierten Luftaustauschvorrichtung 38 befindet sich der Differenzdrucksensor 37, der zur Messung der Druckdifferenz zwischen der Innenseite und der Außenseite des Wohnhauses 31 vorgesehen ist. Dieser Differenzdrucksensor 37 ist in Figur 6 als ein U-förmiges Rohr mit einer darin enthaltenen Flüssigkeit dargestellt. Die linke Hälfte dieses U-förmigen Rohres befindet sich innerhalb des Wohnhauses 31, die rechte Hälfte außerhalb des Wohnhauses 31. Das untere leicht gebogene Verbindungsstück der beiden Bereiche verläuft durch die Außenwand 17. Die beiden oberen Rohrenden des Differenzdrucksensors 37 sind offen, so daß die in dem Differenzdrucksensor 37 eingefüllte Flüssigkeit bei unterschiedlichen Druckverhältnissen zwischen der Innen- und der Außenseite des Wohnhauses 31 jeweils auf der Innen- und auf der Außenseite des Differenzdrucksensors 37 unterschiedliche Höhen der Wassersäule aufweist. In dem in Figur 6 gezeigten zweiten Ausführungsbeispiel ist die Wassersäule im Inneren des Wohnhauses 31 höher ausgebildet als auf der Außenseite des Wohnhauses 31. Dementsprechend herrscht im Gebäudeinneren des Wohnhauses 31 ein relativer Unterdruck zu der Außenseite des Wohnhauses 31. In der Praxis werden die Höhen dieser Wassersäule entweder elektronisch durch Sensoren oder optisch durch Kameras erfaßt. Vor Inbetriebnahme der vorliegenden vierten Luftaustauschvorrichtung 38 ist es notwendig, den Differenzdrucksensor 37 zu eichen bzw. zu kalibrieren, da auf der Innen- und auf der Außenseite des Wohnhauses 31 häufig unterschiedliche Temperaturen anliegen, die sich gemäß der thermischen Zustandsgleichung für ideale Gase: (p^{∗}V/T) = const. auch auf den jeweils im Gebäudeinneren bzw. auf der Außenseite des Gebäudes herrschenden Druck auswirken.

Etwas unterhalb der vierten Luftaustauschvorrichtung 38 befindet sich der akustische Alarmgeber 41, der zur Ausgabe von akustischen Signalen bzw. Signalfolgen fähig ist. Das Notlüftungsgerät 40 ist an der linken Außenwand 17 des Wohnhauses 31 angeordnet. Innerhalb dieses Notlüftungsgeräts 40 ist ein Notluft-Lüfter vorgesehen, der Außenluft durch ein in der Außenwand 17 vorgesehenes Notluftzufuhrrohr ansaugt und durch ein in dem Notlüftungsgerät 40 angeordnetes Notluftzufuhrloch in das Gebäudeinnere des Wohnhauses 31 befördert.

Die in einem mittleren Bereich des Wohnhauses 31 angeordnete Steuerungseinheit 42 weist auf ihrer Oberseite vier Eingänge und auf ihrer Unterseite drei Ausgänge auf. Die vier Eingänge der Steuerungseinheit 42 sind jeweils mittels Draht- bzw. Kabelverbindungen mit dem Temperatursensor 34, mit dem Belüftungsklappenschalter 36, mit dem Differenzdrucksensor 37 sowie mit dem Rauchmelder 39 verbunden. Die Ausgänge der Steuerungseinheit 42 sind ebenfalls mittels Draht- bzw. Kabelverbindungen mit der vierten Luftaustauschvorrichtung 38, mit dem Notlüftungsgerät 40 sowie mit dem Alarmgeber 41 verbunden. Anstelle der Kabel- bzw. Drahtverbindungen der Ein- und Ausgänge der Steuerungseinheit 42 können auch Funkverbindungen in Kombination mit Sendern und Empfängern vorgesehen sein.

Im folgenden wird die Funktionsweise der vierten Luftaustauschvorrichtung 38 in Verbindung mit der Steuerungseinheit 42, mit dem Temperatursensor 34, mit dem Belüftungsklappenschalter 36, mit dem Differenzdrucksensor 37, mit dem Rauchmelder 39, mit dem Notlüftungsgerät 40 und mit dem Alarmgeber 41 näher erläutert.

In einer ersten Variante des zweiten Ausführungsbeispiels weist die Steuerungseinheit 42 nur einen Eingang sowie nur einen Ausgang auf. Der Eingang der Steuerungseinheit 42 ist mit dem Belüftungsklappenschalter 36 der Belüftungsklappe 35 verbunden, der Ausgang der Steuerungseinheit 42 steht mit der vierten Luftaustauschvorrichtung 38 in Verbindung. Zu Beginn der ersten Variante des zweiten Ausführungsbeispiels befinden sich der Belüftungsklappenschalter 36 in einem geschlossenen Zustand und die vierte Luftaustauschvorrichtung 38 in einem Pausezustand. Nun wird von einem Benutzer der Verbrennungsprozeß in dem Kamin 32 gestartet und der Belüftungsklappenschalter 36 betätigt, wodurch die Belüftungsklappe 35 geöffnet wird, so daß die bei dem Verbrennungsprozeß entstehenden Gase nach oben entweichen können. Die Steuerungseinheit 42 erfaßt an ihrem Eingang die Zustandsänderung des Belüftungsklappenschalters 36 und gibt über ihren Ausgang ein Signal an die vierte Luftaustauschvorrichtung 38 ab. Die vierte Luftaustauschvorrichtung 38 nimmt daraufhin ihren Betrieb auf, wobei die Drehfrequenz des Zuluft-Lüfters 16 höher ausgebildet ist als die Drehfrequenz des Fortluft-Lüfters 21, um für eine Luftzirkulation zu sorgen und um genügend Sauerstoff für den Verbrennungsprozeß zur Verfügung zu stellen. Bei Beendigung des Verbrennungsprozesses wird die Belüftungsklappe 35 durch Betätigung des Belüftungsklappenschalters 36 in einen geschlosenen Zustand versetzt. Dies wird durch die Steuerungseinheit 42 erfaßt, die daraufhin die vierte Luftaustauschvorrichtung 38 abschaltet.

In einer zweiten Variante dieses Ausführungsbeispiels ist zusätzlich ein zweiter Eingang der Steuerungseinheit 42 mit dem Temperatursensor 34 verbunden. Dieser Temperatursensor 34 gibt Signale an die Steuerungseinheit 42 weiter, falls die von ihm gemessene Temperatur unter einen vorgegebenen unteren Grenzwert fällt oder einen ebenfalls vorgegebenen oberen Grenzwert übersteigt. Falls die von dem Temperatursensor 34 gemessene Temperatur unter dem unteren Grenzwert liegt, so wird von der Steuerungseinheit 42 ein Signal an die vierte Luftaustauschvorrichtung 38 abgegeben, das diese dazu veranlaßt, die Drehfrequenz des Zuluft-Lüfters 16 zu erhöhen und/oder die Drehfrequenz des Fortluft-Lüfters 21 zu vermindern. Dadurch wird die Menge des dem Verbrennungsprozeß zugeleiteten Sauerstoffs erhöht, was eine Erwärmung bewirkt. Steigt die von dem Temperatursensor 34 erfaßte Temperatur über den oberen Grenzwert, so wird von der Steuerungseinheit 42 ein Signal an die vierten Luftaustauschvorrichtung 38 abgegeben, das eine Verminderung der Drehfrequenz des Zuluft-Lüfters 16 und/oder eine Erhöhung der Drehfrequenz des Fortluft-Lüfters 21 bewirkt. Dadurch wird die dem Verbrennungsprozeß zukommende Sauerstoffmenge reduziert, was eine Verminderung der Temperatur nach sich zieht. Es ist auch denkbar, daß beim Überschreiten des oberen Grenzwerts durch den von dem Temperatursensor 34 gemessenen Temperaturwert die vierte Luftaustauschvorrichtung 38 komplett ausgeschaltet wird.

In einer dritten Variante des zweiten Ausführungsbeispiels ist zusätzlich der dritte Eingang der Steuerungseinheit 42 mit dem Differenzdrucksensor 37 verbunden. Zu Beginn der dritten Variante des zweiten Ausführungsbeispiels ist die Druckdifferenz zwischen der Innenseite und der Außenseite des Wohnhauses 31 gleich Null. Dann wird in dem Kamin 32 der Verbrennungsprozeß gestartet, wodurch die bei der Verbrennung entstehenden Gase nach oben entweichen. Der Belüftungsklappenschalter 36 wird betätigt, wodurch die Belüftungsklappe 35 geöffnet wird. In dem Gebäudeinneren des Wohnhauses 31 entsteht nun nach und nach ein Unterdruck. Nach einer gewissen Zeit detektiert der Differenzdrucksensor 37 eine Druckdifferenz zwischen dem auf der Außenseite und auf der Innenseite herrschenden Druck von 5 Pa. Dies wird von der Steuerungseinheit 42 erfaßt, woraufhin die vierte Luftaustauschvorrichtung 38 in Betrieb genommen wird, wobei der Zuluft-Lüfter 16 mit einer deutlich höheren Drehfrequenz arbeitet als der Fortluft-Lüfter 21. Dadurch wird eine Verminderung der detektierten Druckdifferenz erreicht.

In einer vierten Variante des zweiten Ausführungsbeispiels ist zusätzlich der Rauchmelder 39 mit dem vierten Eingang der Steuerungseinheit 42 verbunden. Wird durch diesen Rauchmelder 39 festgestellt, daß im Abluftstrom 12 vorhandene Schadgase, wie CO, CO₂ oder Cl eine vorgebbare Maximalkonzentration überschreiten, so werden die Drehfrequenzen des Zuluft-Lüfters 16 und des Fortluft-Lüfters 21 weiter erhöht.

In einer fünften Variante des vorliegenden Ausführungsbeispiels ist zusätzlich der Alarmgeber 41 mit dem zweiten Ausgang der Steuerungseinheit 42 verbunden. Dieser Alarmgeber 41 kann dann von der Steuerungseinheit 42 betätigt werden, wenn der Temperatursensor 34 eine überhöhte Temperatur feststellt und/oder wenn der Rauchmelder 39 eine erhöhte Konzentration von Schadgasen im Abluftstrom feststellt und/oder wenn der Differenzdrucksensor 37 entweder ein Überschreiten des Grenzwertes von 10 Pa durch den Differenzdruck Δp registriert oder wenn ein Differenzdruck von mehr als 5 Pa länger als ein durch einen Benutzer vorgebbarer Zeitabschnitt anliegt.

In einer sechsten Variante dieses Ausführungsbeispiels ist noch ein Notlüftungsgerät 40 mit dem dritten Ausgang der Steuerungseinheit 42 verbunden. Dieses Notlüftungsgerät 40 wird dann zugeschaltet, wenn durch den Rauchmelder 39 eine bestimmte Schadgaskonzentration im Gebäudeinneren des Wohnhauses 31 festgestellt wird und/oder wenn der Differenzdruck Δp größer als ein Grenzwert von 10 Pa ausgebildet ist oder wenn der Differenzdruck länger als eine vorgegebene Zeitspanne über dem Grenzwert von 5 Pa liegt.

## Patentansprüche

1. Luftaustauschsystem für die Belüftung wenigstens eines Raums eines Gebäudes (31) mit den folgenden Merkmalen:
- wenigstens eine Luftaustauschvorrichtung (1), die ein Gehäuse (3), einen in dem Gehäuse (3) angeordneten elektrischen Zuluft-Lüfter (16) zur Förderung eines Zuluftstroms (15) und einen in dem Gehäuse (3) angeordneten elektrischen Fortluft-Lüfter (21) zur Förderung eines Fortluftstroms (13) umfaßt,
- wenigstens ein Differenzdrucksensor (37), der die Druckdifferenz zwischen der Innen- und der Außenseite des Gebäudes (31) erfaßt, wobei der wenigstens eine Differenzdrucksensor (37) zur Anbringung in einer Wand des Gebäudes (31) ausgebildet ist,
wobei die Drehfrequenz des Zuluft-Lüfters (16) bzw. der Zuluft-Lüfter (16) und/oder die Drehfrequenz des Fortluft-Lüfters (21) bzw. der Fortluft-Lüfter (21) in Abhängigkeit eines von dem Differenzdrucksensor (37) bzw. von den Differenzdrucksensoren (37) gemessenen Differenzdrucks zwischen der Innen- und der Außenseite des Gebäudes (31) veränderbar sind.

2. Luftaustauschsystem nach Anspruch 1, wobei der wenigstens eine Differenzdrucksensor (37) als Manometer ausgebildet ist.

3. Luftaustauschsystem nach Anspruch 1 oder Anspruch 2, wobei der wenigstens eine Differenzdrucksensor (37) als U-Rohr ausgebildet ist.

4. Luftaustauschsystem nach einem der Ansprüche 1 bis 3 mit einer Notlüftungsvorrichtung (40),
**dadurch gekennzeichnet, daß**
die Notlüftungsvorrichtung (40) wenigstens einen Zuluft-Lüfter aufweist, der mit einer vorgebbaren Drehfrequenz einen Zuluftstrom (15) fördert, wenn eine von einem Temperatursensor (34) bzw. von mehreren Temperatursensoren (34) gemessene Temperatur einen vorgebbaren Wert unterschreitet.

5. Luftaustauschsystem nach dem Anspruch 4 mit einem Alarmgeber (31),
**dadurch gekennzeichnet, daß**
durch den Alarmgeber (31) ein Alarmsignal erzeugbar ist, wenn die durch den Temperatursensor (34) und/oder durch die Temperatursensoren (34) gemessene Temperatur über einem bestimmten vorgebbaren Wert liegt und/oder wenn die von dem bzw. einem Differenzdrucksensor (37) gemessene Druckdifferenz zwischen der Innen- und der Außenseite des Gebäudes (31) insbesondere länger als eine bestimmte vorgebbare Zeitspanne über einem bestimmten vorgebbaren Wert liegt.

6. Luftaustauschsystem nach einem der Ansprüche 1 bis 5 mit einem Alarmgeber (41) und mit einem Rauchmelder (39),
**dadurch gekennzeichnet, daß**
der Rauchmelder (39) in einem Einlaßbereich vor dem Fortluft-Lüfter (21) angeordnet ist, wobei durch den Alarmgeber (41) ein Alarmsignal erzeugbar ist, wenn durch den Rauchmelder (39) eine bestimmte vorgebbare Schadgaskonzentration, insbesondere von CO, CO2 oder Cl im Abluftstrom (12) festgestellt wird.

7. Luftaustauschsystem nach Anspruch 6 mit einer Steuerungseinheit (42),
**dadurch gekennzeichnet, daß**
die Steuerungseinheit (42) die folgenden Merkmale aufweist:
- die Eingänge der Steuerungseinheit (42) sind mit dem Temperatursensor (34) und/oder mit dem Differenzdrucksensor (37) und/oder mit dem Rauchmelder (39) verbunden,
- die Ausgänge der Steuerungseinheit (42) sind mit der Luftaustauschvorrichtung (38) und/oder mit dem Notlüftungsgerät (40) und/oder mit dem Alarmgeber (41) verbunden,
- die Drehfrequenz und/oder der Anstellwinkel der Lüfterblätter des Zuluft-Lüfters (16) und/oder die Drehfrequenz und/oder der Anstellwinkel der Lüfterblätter des Fortluft-Lüfters (21) sind in Abhängigkeit der an den Eingängen der Steuerungseinheit (42) anliegenden Signale veränderbar und/oder das Notlüftungsgerät (40) und/oder der Alarmgeber (41) sind in Abhängigkeit der an den Eingängen der Steuerungseinheit (42) anliegenden Signale einschaltbar.

8. Luftaustauschsystem nach einem der Ansprüche 1 bis 7,
**dadurch gekennzeichnet, daß**
in dem Gehäuse (3) der Luftaustauschvorrichtung (38) ein Wärmetauscher (2) angeordnet ist, durch dessen Erwärmseite der Zuluftstrom (15) und durch dessen Abkühlseite der Abluftstrom (12) fließt.

9. Luftaustauschsystem nach einem der Ansprüche 1 bis 8,
**dadurch gekennzeichnet, daß**
die Gehäuserückseite der Luftaustauschvorrichtung (38) an einer Außenwand (17) des Gebäudes (31) anbringbar ist und daß an bzw. in der Außenwand (17) wenigstens eine Rohrverbindung (18, 22) zu der Außenseite des Gebäudes (31) vorgesehen ist.

10. Luftaustauschsystem nach einem der Ansprüche 1 bis 9, wobei die Luftaustauschvorrichtung so konfiguriert ist, dass die Luftaustauschvorrichtung (38) eingeschaltet wird, wenn ein mit dem Differenzdrucksensor (37) gemessener Differenzdruck einen vorgegebenen Differenzdruck überschreitet.

11. Luftaustauschsystem für die Belüftung wenigstens eines Raums eines Gebäudes (31) mit den folgenden Merkmalen:
- wenigstens eine Luftaustauschvorrichtung (1), die ein Gehäuse (3), einen in dem Gehäuse (3) angeordneten elektrischen Zuluft-Lüfter (16) zur Förderung eines Zuluftstroms (15) und einen in dem Gehäuse (3) angeordneten elektrischen Fortluft-Lüfter (21) zur Förderung eines Fortluftstroms (13) umfaßt,
- einen Innendrucksensor, der zur Anbringung in dem Gebäude (31), einen Außendrucksensor, der zur Anbringung außerhalb des Gebäudes (31) ausgebildet ist, wobei der Innendrucksensor und der Außendrucksensor die Druckdifferenz zwischen der Innen- und der Außenseite des Gebäudes (31) erfassen,
wobei die Drehfrequenz des Zuluft-Lüfters (16) bzw. der Zuluft-Lüfter (16) und/oder die Drehfrequenz des Fortluft-Lüfters (21) bzw. der Fortluft-Lüfter (21) in Abhängigkeit eines von dem Innendrucksensor und dem Außendrucksensor gemessenen Differenzdrucks zwischen der Innen- und der Außenseite des Gebäudes (31) veränderbar sind.

12. Luftaustauschsystem nach Anspruch 11, wobei der Innendrucksensor und der Außendrucksensor, die die Druckdifferenz zwischen der Innen- und der Außenseite des Gebäudes (31) erfassen, jeweils als Barometer ausgebildet sind.

## Claims

1. Air exchange system for the ventilation of at least one room of a building (31) with the following features:
- at least an air exchange device (1), which comprises a casing (3), an electric supply air fan (16) arranged in the casing (3) for the transportation of a supply air stream (15) and an electric exhaust air fan (21) arranged in the casing (3) for the transportation of an exhaust air stream (13),
- at least a differential pressure sensor (37), which captures the pressure difference between the inner side and the outer side of the building (31), wherein the at least one differential pressure sensor (37) is adapted for the installation in a wall of the building (31), wherein the rotation frequency of the supply air fan (16) or the supply air fans (16) and/or or the rotation frequency of the exhaust air fan (21) or the exhaust air fans (21) is modifiable depending on a differential pressured between the inner side and the outer side of the building (31) measured by the differential pressure sensor (37) or the differential pressure sensors (37).

2. Air exchange system according to claim 1, wherein the at least one differential pressure sensor (37) is configured as a manometer.

3. Air exchange system according to claim 1 or claim 2, wherein the at least one differential pressure sensor is configured as a U-shaped tube.

4. Air exchange system according to one of the claims 1 to 3, with an emergency ventilation apparatus (40),
**characterized in that**
the emergency ventilation apparatus (40) comprises at least one emergency ventilator, which conveys a supply air flow (15) with a pre-settable rotation frequency, if a temperature measured by a temperature sensor (34) or by multiple temperature sensors (34) falls below a pre-settable value.

5. Air exchange system according to claim 4, with an alarm generator (31), **characterized in that**
an alarm signal can be generated by the alarm generator (31) if the temperature measured by the temperature sensor (34) and/or by the temperature sensors (34) is above a certain pre-settable value and/or if the pressure difference between the inner side and the outer side of the building (31) measured by the or by a differential pressure sensor (37) is in particular for more than a certain pre-settable time span above a certain pre-settable value.

6. Air exchange system according to one of the claims 1 to 5 with an alarm generator (41) and with a smoke detector (39), **characterized in that**
the smoke detector (39) is arranged in an inlet region before the exhaust air fan (21), wherein an alarm signal can be generated by the alarm generator (41) if the smoke detector (39) detects a certain pre-settable harmful gas concentration, in particular of CO, CO2 or Cl in the exhaust air flow.

7. Air exchange system according to claim 6 with a control unit (42), **characterized in that** the control unit (42) comprises the following features:
- the input connections of the control unit (42) are connected with the temperature sensor (34) and/or with the differential pressure sensor (37) and/or with the smoke detector (39),
- the output connections of the control unit (42) are connected with the air exchange device (38) and/or with the emergency ventilation apparatus (40) and/or with the alarm generator (41),
- the rotation frequency and/or the angle of attack of the fan blades of the supply air fan (16) and/or the rotation frequency and/or the angle of attack of the fan blades of the exhaust air fan (21) are modifiable depending on the signals present at the input connections of the control unit (42) and/or the emergency ventilation apparatus (40) and/or the alarm generator can be switched on depending on the signals present at the input connections of the control unit (42).

8. Air exchange system according to one of the claims 1 to 7, **characterized in that**
in the casing (3) of the air exchange device (38) a heat exchanger (2) is arranged, through the heating side of which flows the supply air flow (15) and through the cooling side of which flows the exhaust air flow (12).

9. Air exchange system according to one of the claims 1 to 8, **characterized in that**
the rear side of the casing of the air exchange device (38) can be mounted on an outer wall (17) of the building (31) and **in that**, at or in the outer wall (17), at least one pipe connection (18, 22) is provided towards the outer side of the building (31).

10. Air exchange system according to one of the claims 1 to 9, wherein the air exchange device is configured such, that the air exchange device (38) is switched on, if a differential pressure measured by the differential pressure sensor (37) exceeds a predetermined differential pressure.

11. Air exchange system for the ventilation of at least one room of a building (31) with the following features:
- at least one air exchange device (1), which comprises a casing (3), an electric supply air fan (16) arranged in the casing (3) for the transportation of a supply air flow (15), and an electric exhaust air fan (21) arranged in the casing (3) for the transportation of an exhaust air flow (13),
- an interior pressure sensor, which is configured for the mounting in the building (31), an exterior pressure sensor, which is configured for the mounting outside of the building (31), wherein the interior pressure sensor and the exterior pressure sensor capture a pressure difference between the inside and the outside of the building (31),
wherein the rotation frequency of the supply air fan (16) or the supply air fans (16) and/or the rotation frequency of the exhaust air fan (21) or the exhaust air fans (21) is modifiable depending on a differential pressure measured by the interior pressure sensor and the exterior pressure sensor.

12. Air exchange system according to claim 11, wherein the interior pressure sensor and the exterior pressure sensor, which capture the pressure difference between the inside and the outside of the building (31), are respectively configured as barometer.

## Revendications

1. Système de renouvellement d'air pour la ventilation d'au moins une chambre d'un bâtiment (31) avec des caractéristiques suivantes :
- au moins un dispositif d'échange d'air (1) qui comprend une boîte (3), un ventilateur électrique d'air entrant (16) arrangé dans la boîte (3) pour transporter un courant d'air entrant (15) et un ventilateur électrique d'air sortant (21) pour transporter un courant d'air sortant (13),
- au moins un capteur de pression différentielle (37) qui capture une différence de pression entre le côté intérieur et le côté extérieur du bâtiment (31), dans lequel l'au moins un capteur de pression différentielle (37) est configuré pour le montage à une paroi du bâtiment (31),
dans lequel la fréquence de rotation du ventilateur d'air entrant (16) ou des ventilateurs d'air entrant (16) et/ou la fréquence de rotations du ventilateur d'air sortant (21) ou des ventilateur d'air sortant (21) sont modifiables en fonction d'une pression différentielle mesurée par le capteur de pression différentielle (37) ou par les capteurs de pression différentielle (37) entre le côte intérieur et le côté extérieur du bâtiment (31).

2. Système de renouvellement d'air selon revendication 1, dans lequel l'au moins un capteur de pression différentielle (37) est configuré comme un manomètre.

3. Système de renouvellement d'air selon revendication 1 ou revendication 2, dans lequel l'au moins un capteur de pression différentielle est configuré comme un tube en U.

4. Système de renouvellement d'air selon une des revendications 1 à 3, avec un dispositif de ventilation d'urgence (40), **caractérisé en ce que** le dispositif de ventilation d'urgence comprend au moin un ventilateur d'air entrant qui transporte, avec une fréquence de rotation prédéfinissable, un courant d'air entrant (15), quand une température mesuré par un capteur de température (34) ou de plusieurs capteurs de température (34) descend en dessous d'une value prédéfinissable.

5. Système de renouvellement d'air selon revendication 4 avec un générateur d'alarme (31), **caractérisé en ce que** un signal d'alarme peut être généré, quand la température mesuré par le capteur de température (34) et/ou par les capteurs de température (34) est supérieure à une certaine valeur prédéfinissable et/ou quand la différence de pression entre le côté intérieur et le côté extérieur du bâtiment (31) est en particulier supérieur à une certaine valeur prédéfinissable pour plus d'une certaine période de temps prédéfinissable.

6. Système de renouvellement d'air selon une des revendications 1 à 5 avec un générateur d'alarme (41) et un détecteur de fumée (39), **caractérisé en ce que** le détecteur de fumée (39) est arrangé dans une région d'admission en avant du ventilateur d'air sortant (21), dans lequel un signal d'alarme peut être généré par le générateur d'alarme (41), quand le détecteur de fumée (39) détecte une certaine concentration prédéfinissable de gaz nocif, en particulier de CO, CO2 ou Cl dans le courant d'air sortant (12).

7. Système de renouvellement d'air selon revendication 6 avec une unité de contrôle (42) **caractérisé en ce que** l'unité de contrôle (42) comprend des caractéristiques suivantes :
- les entrées de l'unité de contrôle (42) sont connectées avec le capteur de température (34) et/ou avec le capteur de pression différentielle (37) et/ou avec le détecteur de fumée (39),
- les sorties de l'unité de contrôle (42) sont connectées avec le dispositif de renouvellement d'air (38) et/ou avec le dispositif de ventilation d'urgence (40) et/ou avec le générateur d'alarme (41),
- la fréquence de rotation et/ou l'angle d'attaque des pales de ventilateur du ventilateur d'air entrant (16) et/ou la fréquence de rotation et/ou l'angle d'attaque des pales de ventilateur du ventilateur d'air sortant (21) sont modifiables et/ou le dispositif de ventilation d'urgence (40) et/ou le générateur d'alarme (41) peut être enclenché en fonction du signaux présents aux entrées de l'unité de contrôle (42).

8. Système de renouvellement d'air selon une des revendications 1 à 7, **caractérisé en ce que** un échangeur de chaleur (2) est arrangé dans la boîte (3) du dispositif de renouvellement d'air (38), dont le courant d'air entrant (15) coule à travers le côté de chauffage de celui-ci et le courant d'air sortant (12) coule à travers le côté de refroidissement de celui-ci.

9. Système de renouvellement d'air selon une des revendications 1 à 8, **caractérisé en ce que** la face arrière de la boîte du dispositif de renouvellement d'air (38) peut être montée à une paroi extérieure du bâtiment (31) et **en ce que** au moins un raccord de tuyau (18, 22) est prévu vers le côté extérieur du bâtiment (31).

10. Système de renouvellement d'air selon une des revendications 1 à 9,
dans lequel le dispositif de renouvellement d'air est configuré de sorte que le dispositif de renouvellement d'air (38) est enclenché quand une pression différentielle mesurée par le capteur de pression différentielle (37) dépasse une pression différentielle prédéfinie.

11. Système de renouvellement d'air pour la ventilation d'au moins une chambre d'un bâtiment (31) avec des caractéristiques suivantes :
- au moins un dispositif de renouvellement d'air (1), qui comprend une boîte (3), un ventilateur électrique d'air entrant (16) arrangé dans la boîte (3) pour transporter un courant d'air entrant (15) et un ventilateur électrique d'air sortant (21) arrangé dans la boîte (3) pour transporter un courant d'air sortant (13),
- un capteur de pression intérieure, qui est configuré pour le montage à l'intérieur du bâtiment (31), un capteur de pression extérieure qui est configuré pour le montage à l'extérieur du bâtiment (31), dans lequel le capteur de pression intérieure et le capteur de pression extérieure capturent la différence de pression entre le côté intérieur et le côté extérieur du bâtiment (31), dans lequel la fréquence de rotation du ventilateur d'air entrant (16) ou des ventilateurs d'air entrant (16) et/ou la fréquence de rotation du ventilateur d'air sortant (21) ou des ventilateurs d'air sortant (21) sont modifiables en fonction d'une pression différentielle entre le côté intérieur et le côté extérieur du bâtiment (31) mesurée par le capteur de pression intérieure et le capteur de pression extérieure.

12. Système de renouvellement d'air selon revendication 11, dans lequel le capteur de pression intérieur et le capteur de pression extérieur, qui capturent la différence de pression entre le côté intérieur et le côté extérieur du bâtiment (31), sont respectivement configurés comme des baromètres.
